# EUROPEAN PATENT APPLICATION

(11) **EP 1 962 280 A1**
(43) Date of publication of application: **27.08.2008**
(21) Application number: 06405105.5
(22) Date of filing: 08.03.2006
(51) Int. Cl.: G10L 17/00, G06K 9/68, G07C 9/00

(54) **Method and network-based biometric system for biometric authentication of an end user**

(71) Applicant: BIOMETRY.com AG, 6055 Alpnach (CH)
(72) Inventor: Fischer, Dietmar, Dr., 85469 Brunnthal (DE); Frischholz, Robert, Dr., 90427 Nürnberg (DE); Blessing, Werner, 6039 Root (CH)
(74) Representative: Rutz & Partner

(57) **Abstract**

The method and network-based biometric system allow reliable biometric authentication of end users in at least one institution, such as a commercial, financial or official institution, by means of an authentication server (15), which is accessible over a network (5) such as the Internet, from end user terminals (23), which are equipped with audio- and video-recording devices (21, 22) and which are designed for simultaneously capturing biometric audio and video samples from the end user. According to the present invention during enrolment of an end user biometric audio and video samples are simultaneously captured and stored in a database (100). For the on-line authentication of the end user biometric audio and video samples are simultaneously capturing for speech elements or speech segments expressed by the end user based on randomly assembled and dictated speech elements. Then, by comparing the on-line captured biometric audio and video data with correspondingly assembled pre-stored biometric data the authentication server (15) decides whether said biometric data sufficiently match for identifying the end user.

## Description

The present invention relates to a method and a network-based biometric system that allow reliable biometric authentication of an end user.

### BACKGROUND OF THE INVENTION

The implementation of various Internet applications with transaction capabilities that allow buying or selling goods and performing commercial, financial or official transactions is steadily accompanied by discussions concerning transaction vulnerabilities, crypto system weaknesses and privacy issues.

Technological developments made a variety of controls available for computer security including tokens, biometric verifiers, encryption, authentication and digital signature techniques using preferably asymmetric public-key methods (see [1], A. Menezes, P. van Oorschot, S. Vanstone, HANDBOOK OF APPLIED CRYPTOGRAPHY, CRC-Press, Boca Raton 1997, chapter 1).

The core element of security services is authentication, i.e. the assurance of the identity of the end user to the service provider, such as a commercial, financial or official institution, e.g. a bank.

Cryptosystems involve publicly known transformations of information, based on one or more keys, at least one of which being kept secret. The public-key cryptosystem disclosed 1976 by Diffie and Hellman is based on two keys, a private-key and a public-key, owned by users of this system. Hence, these cryptosystems are based on individuals being identified by auxiliary means, which may not be available or which may already be obsolete when needed. Further, these auxiliary means may get copied and then be misused by an attacker. Still further, the auxiliary means are issued by a third party that requires trust and may therefore not be accepted by end users for psychological reasons.

Hence, although additional equipment is required, end users and institutions often prefer "Biometric identification" that uses biometric data, which can not get lost or obsolete, since it is inherently coupled to an end user. "Biometric identification" is performed by means of a unimodal or multimodal biometric system that is capable of capturing a biometric sample from an end user; extracting biometric data from that biometric sample; comparing that specific biometric data values with that contained in one or more reference templates; deciding, preferably based on a threshold, how well the data match; and indicating whether or not an authentication, i.e. an identification or verification of the identity of the end user has been achieved. Typically, with the verification function, a a match between proffered biometric data of an end user and the "biometric template" stored for this end user during enrolment is evaluated. For identification purposes a one-to-many search is performed between proffered biometric data and a collection of "biometric templates" representing all of the subjects who have enrolled in the system.

Current Biometric Recognition techniques are described in [2], Anil K. Jain, Arun Ross and Salil Prabhakar, An Introduction to Biometric Recognition, IEEE Transactions on Circuits and Systems for Video Technology, Special Issue on Image- and Video-Based Biometrics, Vol. 14, No. 1, January 2004. According to [2] a number of biometric characteristics exist and are in use in various applications. Each biometric has its strengths and weaknesses, and the choice depends on the application. No single biometric is expected to effectively meet the requirements of all the applications. In other words, no biometric is "optimal". According to [2], voice is a combination of physiological and behavioural biometrics. The features of an individual's voice are based on the shape and size of the appendages (e.g., vocal tracts, mouth, nasal cavities, and lips) that are used in the synthesis of the sound. These physiological characteristics of human speech are invariant for an individual, but the behavioural part of the speech of a person changes over time due to age, medical conditions, emotional state, etc. Voice is also not very distinctive. A text-dependent voice recognition system is based on the utterance of a fixed predetermined phrase. A text-independent voice recognition system recognizes the speaker independent of what she speaks.

A multimodal biometric system that comprises text-dependent voice recognition is disclosed in [3], US 6'101'264. Instead of comparing static biometrics, which could easily get copied by an attacker, the biometric system disclosed in [3] is based on capturing and comparing predetermined actions of an end user. As an example, it is proposed to perform typical movement actions such as performing a walk or a head movement or speaking a predetermined word or sentence for text-dependent voice recognition. The performance of predetermined actions however is based on a previously made determination which is static and does not provide a much higher reliability. An impostor may overview the authentication procedure with the predetermined movement sequence performed by the end user and subsequently try to make fraudulent use of the gained information. Hence the risk of spoof attacks resulting in a false acceptance is still not neglectable with this method.

It would therefore be desirable to provide a further improved method and a multimodal biometric system that allow more reliable biometric identification.

It would be desirable in particular to provide a method that allows on-line authentication processes in network-based systems with equipment typically being available at the end user site.

More particularly it would be desirable to provide a method that allows rapid performance of enrolment and authentication processes while simultaneously reducing the false acceptance rate.

### SUMMARY OF THE INVENTION

The above and other objects of the present invention are achieved by a method and a network-based biometric system according to claim 1 and 0 respectively.

The inventive method and network-based biometric system allow reliable biometric authentication of a registered end user in at least one institution, such as a commercial, financial or official institution, e.g. a bank.

The network-based biometric system comprises for each institution at least one authentication server, which is accessible over at least one network, such as the Internet, from end user terminals, e.g. personal computers, notebooks or mobile phones, which are equipped with audio- and video-recording devices and which are designed for simultaneously capturing biometric audio and video samples from the related end user that has been identified and enrolled at a registration authority.

According to the present invention, for the enrolment of an end user at a registration authority the following steps are performed.

Initially the end user is providing credentials, such a as a passport, an official certificate, to the registration authority that allow correct authentication of the end user. Based on these credentials a non-biometric user profile is established.

Then, for dictated speech elements or speech segments or related information that is provided by the registration authority, biometric audio and video samples are simultaneously captured from speech elements or speech segments expressed by the end user by means of an enrolment terminal that is equipped with audio- and video-recording devices. I.e. a challenge is issued to the end user to express a response which is acoustically and optically captured.

Then, the non-biometric user profile is stored in a database together with the dictated information and the accordingly captured biometric audio and video samples or biometric data extracted therefrom, which represents the biometric profile of the end user. The dictated information stored in the database is used as an impersonalised image of the captured biometric user profile that is presented in selected extracts on-line to an end user in order to capture corresponding biometric samples from the end user and to the test whether the on-line captured biometric data match to ones pre-stored during enrolment.

Hence, according to the present invention not a predetermined static image of the biometric user profile, e.g. represented by static sequences of movements or acoustical expressions is applied, which would be vulnerable to a spoof attack. The image or extract taken from the stored biometric profile is continuously altered and brought into different and unexpected appearances by randomly assembling the fragments of the dictated information for each session.

Therefore, a sequence of randomly assembled dictated speech elements or speech segments, for which biometric audio and video samples were captured from the end user, is generated and corresponding information is sent over the network to the end user terminal with a request to provide a corresponding response.

Then, for the corresponding speech elements or speech segments expressed by the end user, biometric audio and video samples are simultaneously captured. The captured biometric audio and video samples or related biometric data that has been extracted therefrom is sent over the network to the authentication server, which compares the on-line captured biometric audio and video samples or the related biometric data with biometric audio and video samples or related biometric data, which was retrieved from the database of the registration authority and then accordingly assembled.

If the rightful end user has provided the response, then the sequence of on-line captured biometric data and accordingly assembled biometric data taken from the database of the registration authority should closely match.

Preferably based on a threshold, it is evaluated, how well the data match and indicated whether or not an authentication, i.e. an identification or verification of the identity of the end user has been achieved.

In a preferred embodiment a set of dictated speech elements or speech segments is created for the enrolment of each end user individually, so that a previously enrolled end user can not use the information gained during the enrolment process for a spoofing attack on the system to the disadvantage of another end user.

The dictated speech elements preferably comprise the vowels and consonants of the alphabet. The speech segments preferably comprise the numbers of 0, ..., 9. Further, for each end user additional key words or sentences in one or more languages may be recorded.

The dictated speech elements or speech segments that were created for enrolment or randomly assembled for authentication are issued in form of an audio-file, a text file or a graphical file. Issuing not audible information to the end user terminal makes it more difficult for an impostor to gain useful information, e.g. obtaining the information at all or guessing the correct pronunciation.

For the authentication process, preferably movements of the end users mouth region, particularly movements of the lips and tongue, as well as the correspondingly expressed audio data are compared. This covers the relevant biometric information that is simultaneously expressed by the end user while excluding additional features that could be disturbing; e.g. wearing different glasses, having a different skin colour. Thus, false rejections are avoided even in the event that the appearance of the end user has substantially changed.

Non-text dependent voice recognition and/or face recognition techniques may separately be applied with little effort based on the captured biometric data in order to further reduce the false acceptance rate. As well, text dependent visual or acoustical speech recognition techniques could be applied. The application of a visual speech recognition system that is using captured data would be particularly helpful. Visual speech recognition is described in [7], Kate Saenko, Karen Livescu, James Glass, and Trevor Darrell PRODUCTION DOMAIN MODELING OF PRONUNCIATION FOR VISUAL SPEECH RECOGNITION, Computer Science and Artificial Intelligence Laboratory, Massachusetts Institute of Technology, 32 Vassar Street, Cambridge, MA 02139, USA. Hence a visual speech recognition system could be used, that comprises for example a trained neural network, and that makes use of the user data. Preferably the neural network has been trained on the data provided by the end user. An automatic speech recognition system that is using neural networks is described in [8], Joe Frankel-Korin Richmond-Simon-King Paul Taylor, AN AUTOMATIC SPEECH RECOGNITION SYSTEM USING NEURAL NETWORKS AND LINEAR DYNAMIC MODELS TO RECOVER AND MODEL ARTICULATORY TRACES,Centre for Speech Technology Research, University of Edinburgh, 2 Buccleuch Place, Edinburgh EH8 9LW, UK.

Using an visual and/or acoustical speech recognition system, that is individualised for authentication purposes for each end user provides a much higher flexibility allowing creating fully random challenges even with speech elements, that were not dictated during enrolment. Thus, during enrolment the neural network could be trained individually with the enrolee, so that speech would be recognised for this enrolee only, based on the training data that were extracted from the biometric samples.

This solution has various advantages. It allows using currently available acoustical and visual speech recognition systems that can individually be trained. Based on personalised training data it allows recognition of the end user and the recognition of the visual or acoustical speech response. Hence it can be verified that the legitimate end user has provided the correct response. Further, it allows the storage of training data only, avoiding the storage of security relevant personal images of the end user. Further the authentication can easily be performed by simply loading the individual set of training data into the neural network for each authentication.

Biometric data is preferably encrypted and/or compressed for the storage in the database of the registration authority or for the transfer over the network. Hence, in the event of an intrusion in to the network-based biometric system the related information of the end user is protected and may not be exploited by the intruder.

The authentication of an end user is preferably performed whenever the performance of a commercial or official transaction is requested.

The network-based biometric system preferably includes fixed or mobile user terminals; such as desktop personal computers and notebooks, mobile telephones, standard telephones or IP-telephones; which are equipped with a microphone and a camera.

In a preferred embodiment, mobile phones are used, which are supported by a telecommunications network that preferably combines a Mobile Telecommunications Network and at least one wired network such as an IP-network, e.g. the Internet, and/or a Public Switched Telephone Network PSTN/ISDN. The mobile terminal preferably comprises a rotatable camera, which can be turned towards the end user who is observing the display and operating the keyboard. For standard use, e.g. for taking pictures, the camera is turned in opposite direction. The use of mobile phones for the network-based biometric system allows authentication of the end user at any place. This is of course very convenient for performing any transactions at any place. However it is particularly advantageous for access control. An end user may be authenticated at an access point by means of the mobile terminal. Access is granted if the authentication of the end user was successful. Preferably, in order to verify that the end user himself is at this access point, the authentication server may output an access code on an acoustical or optical output device installed at the access point. During authentication the end user may be requested to record the access code with her terminal proving that she is present at the access point.

In a further preferred embodiment a unique code, such as the International Mobile Equipment Identity (IMEI), is read from the mobile phone and compared with a pre-stored value, in order to identify the end user together with his mobile phone.

In a further preferred embodiment weighting factors are applied to the tresholds of the individual biometrics captured from the end user. These weighting factors are preferably selected according to the specific application (e.g. e-banking, access control, official and military purposes), the distinctiveness of the individual biometric, the individual end user, the end user terminal and/or the value or importance of the transaction. E.g., for the access control in a factory the weights may be selected far lower than in the head quarter of a bank, in an official institution or in a power plant. For a transaction worth hundred dollars, the weighting factors are lower than for a transaction worth thousand dollars. In other words, allowed matching differences that are compared with thresholds, are smaller for more valuable or important transactions. If the distinctiveness of a biometric is not very high, then the allowed matching difference is also selected smaller.

### BRIEF DESCRIPTION OF THE DRAWINGS

Some of the objects and advantages of the present invention have been stated, others will appear when the following description is considered together with the accompanying drawings, in which:
- Figure 1: shows, the enrolment of an end user at a registration authority 10;
- Figure 2: shows a sequence of speech elements and segments expressed by the end user based on dictated speech elements provided by the registration authority 10 during enrolment;
- Figure 3: shows speech elements and segments of figure 2 dictated in a different sequence issued by an authentication server 15 on-line for authentication purposes;
- Figure 4: shows the authentication procedure performed with an inventive biometric system;
- Figure 5: shows further details of the authentication procedure of figure 4 and modules implemented in the transaction server 15;
- Figure 6: shows the enrolment server 13 with the implemented enrolment module 139, which comprises sub-modules 131, ..., 134;
- Figure 7: shows the end user terminal 23 with the implemented end user module 230, which comprises sub-modules 231, ..., 234; and
- Figure 8: shows a distributed network-based biometric system, which operates according to the inventive method, with an independent registration authority 10 that provides services for various end users and institutions.

### DETAILED DESCRIPTION OF THE PREFERRED EMBODIMENTS

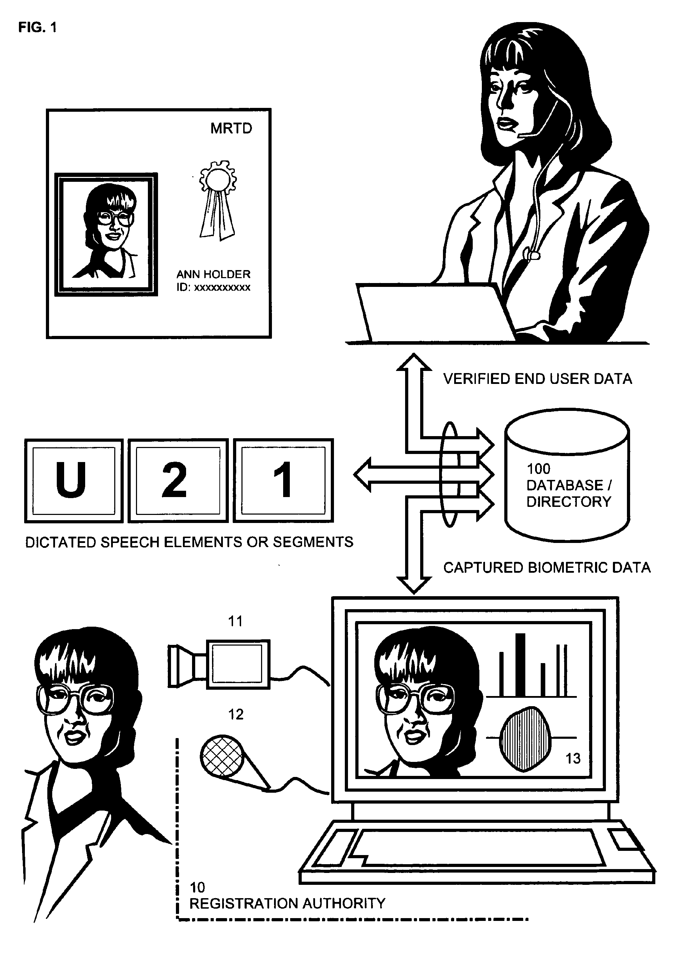

Figure 1 shows the registration authority 10 of an inventive biometric system during the enrolment of an end user. For this purpose the end user has provided credentials, i.e. the passport shown in figure 1, to the registration officer who verifies the end user data and establishes a non-biometric user profile.

Then, in order to establish a biometric user profile the registration officer dictates speech elements or speech segments "U-2-1-, ..." which are repeated by the end user. For the corresponding speech elements or speech segments expressed by the end user, biometric audio and video samples are simultaneously captured by means of video-recording devices 11, 12 (e.g. a microphone and a digital camera) that are connected to an enrolment terminal 13.

The simultaneously captured biometric audio and video samples or related biometric data that were extracted form the audio and video samples, which represent a biometric profile of the end user, are then stored, together with the non-biometric profile in the database or directory of the registration authority.

Further stored is information, which relates to the dictated speech elements or speech segments and which is linked to the captured biometric audio and video samples or related biometric data. This information may be stored in the form of dictated speech elements or speech segments or preferably as a code that points to the dictated speech elements or speech segments e.g. text-, audio- or graphics-files that stored in the database 100 or in a separate database. The information, which relates to the dictated speech elements or speech segments may be stored as text which may be used as the file name for the captured audio and video sample files. E.g. the file "2.wav" would be a raw audio file that contains the waveform captured from the end user for the expressed word "two". The wav-file may however be designated with a code xyz.wav with xyz pointing to dictation "two" or "2" contained in another database; i.e. the identifier xyz would link the captured biometric data contained in one memory range to dictated data stored in another memory range.

Instead of a wav.file, which contains raw biometric data, a file could be stored that contains extracted data, that results from a transformation such as a wavelet transformation or a Fourier transformation. Preferably a wavelet transformation is applied that provides a frequency-time representation of the biometric sample. A method and a chip designed for performing a wavelet decomposition is described in [4], R. Timothy Edwards Michael D. Godfrey, An Analog Wavelet Transform Chip, ISL, Dept. of Electrical Engineering, Stanford University, Stanford, California 94305.

On the screen of the enrolment server a waveform for the word "two" is illustrated as well as a spectrogram of the waveform that represents a typical pattern for this end user.

As described in [5], US 6'182'035 B1 Speech is produced by excitation of an acoustic tube, the vocal tract, which is terminated on one end by the lips and on the other end by the glottis. There are three basic classes of speech sounds. Voiced sounds are produced by exciting the vocal tract with quasiperiodic pulses of airflow caused by the opening and closing of the glottis. Fricative sounds are produced by forming a constriction somewhere in the vocal tract and forcing air through the constriction so that turbulence is created, thereby producing a noise-like excitation. Plosive sounds are produced by completely closing off the vocal tract, building up pressure behind the closure, and then abruptly releasing it.

Hence, the vocal tract is an acoustic transmission system characterized by natural frequencies (formants) that correspond to resonances in its frequency response. In normal speech, the vocal tract changes shape relatively slowly with time as the tongue and lips perform the gestures of speech, and thus the vocal tract can be modelled as a slowly time-varying filter that imposes its frequency-response on the spectrum of the excitation.

Since the vocal tract and its movements as well as the movements of tongue and lips are characteristic for each end user, simultaneously capturing acoustical sounds and gestures provides valuable information that can be used to identify the end user at a later stage. Distinctiveness of the combination of these visual and acoustical characteristics is much higher than distinctiveness of one of these characteristics alone.

During the enrolment procedures preferably all speech elements, together with the related gestures of lips and tongue, are captured that are required in normal speech. Hence, dictated speech elements can randomly be assembled and concatenated, in order to generate new words or words contained in a dictionary. The random selection and concatenation of speech elements can therefore be limited to known words or extended to new word creations. By accordingly assembling and concatenating speech elements captured from the end user during enrolment the expected response from the end user can be modelled and used for authentication purposes.

Preferably complete speech segments or even sentences that contain numerous speech elements are captured as well.

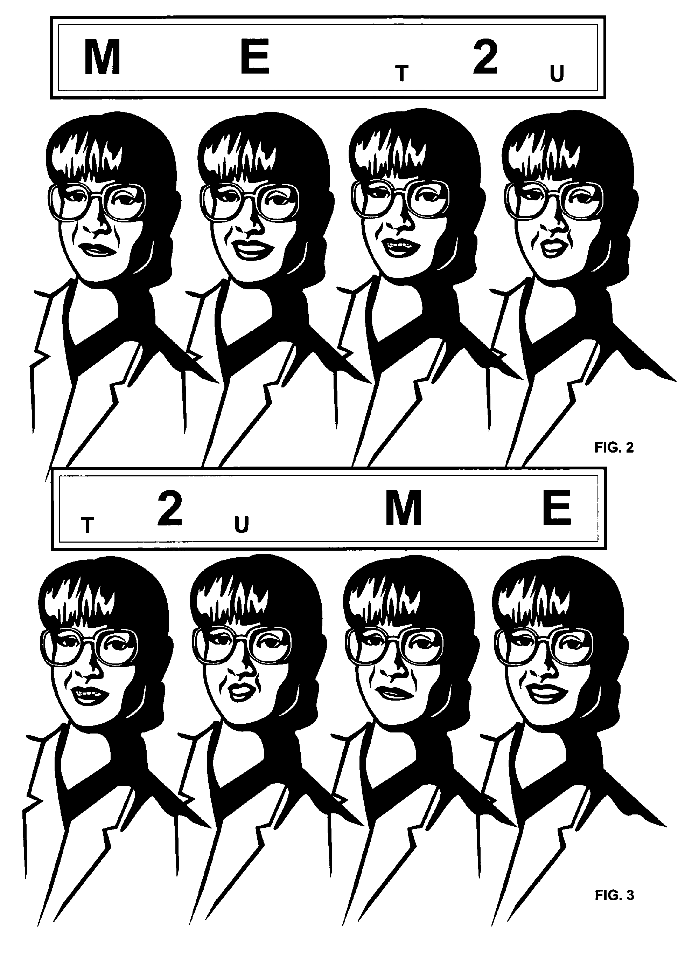

Figure 2 shows a sequence of speech elements and segments that were expressed by the end user based on dictated speech elements, which were issued in text-form, in graphical form or as an audio file. Figure 2 shows that the speech elements "T" and "U" could be replaced by the speech segment "2".

Instead of dictating the speech elements by the registration officer, the speech elements can be issued on the screen of the enrolment server 13, so that the enrolment process can be automated. If the credentials comprise a machine readable passport then the enrolment process can completely be automated.

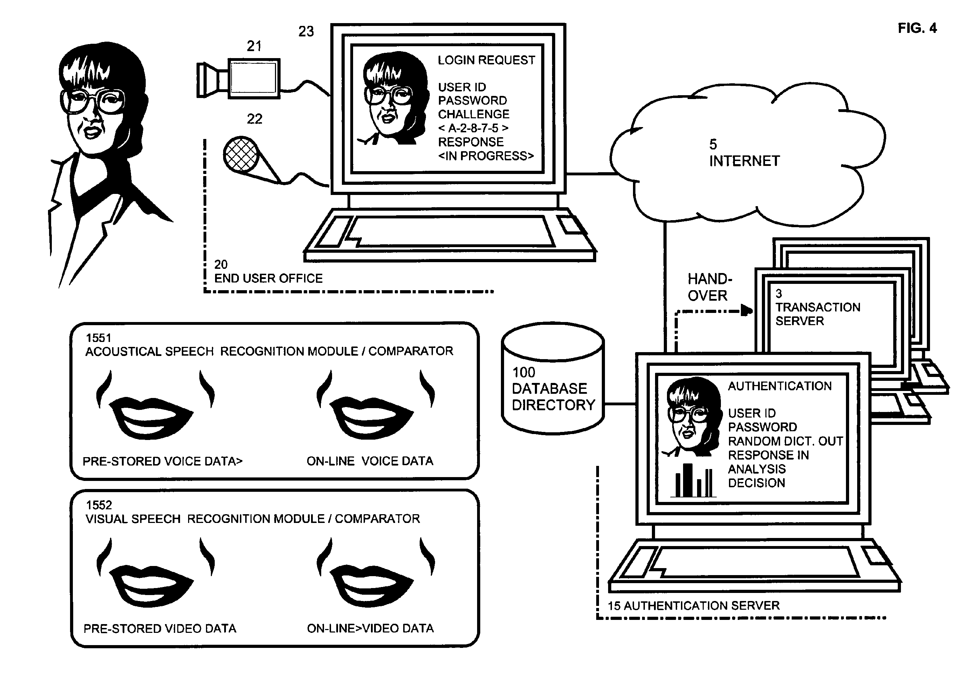

Figure 3 shows speech elements and segments of figure 2 dictated in a different sequence that has been issued by an authentication server 15 (see figure 4) on-line for authentication purposes.

Hence, the inventive method operates with a random challenge and response procedure that provides a high reliability, i.e a low false acceptance rate.

Thus, according to the present invention, not a static appearance of the biometric user profile, e.g. represented by static images or static sequences of movements or acoustical expressions is applied, which would be vulnerable to a spoof attack. The recorded information that is the basis of the biometric user profile is continuously altered and brought into different and unexpected appearances by randomly assembling the fragments of the pre-stored information for each session. Already with a small number of speech-elements a large number of individual word strings or challenges can be created, that are not expected by the end user or an impostor. The simple example shown in figures 3 and 4 proves that sentences or fragments of sentences with different meanings can be created with a few speech elements. Although this is not mandatory, the speech elements are preferably assembled in such a way that a meaningful word or a sentence in a preferred language results.

Since the speech elements captured from the end user can be assembled according to the created string, the authentication server 15 can compare the on-line response of the user with the pre-stored and correctly assembled biometric data and decide whether the data match closely enough for the authentication of the end user.

The risk that an impostor is able to simultaneously provide identical biometric characteristics for a unique dictation is extremely small. However if the security level provided with these measures is not yet considered sufficient, the biometric system may perform further authentication processes such as voice recognition and/or face recognition methods, which are described in [2]. For this purpose the characteristics of the voice and face of the end user are registered during enrolment and stored in the database as well. Voice recognition and face recognition provide a higher trust and can be performed without any additional hardware means.

Figure 4 shows the authentication procedure performed with an inventive biometric system.

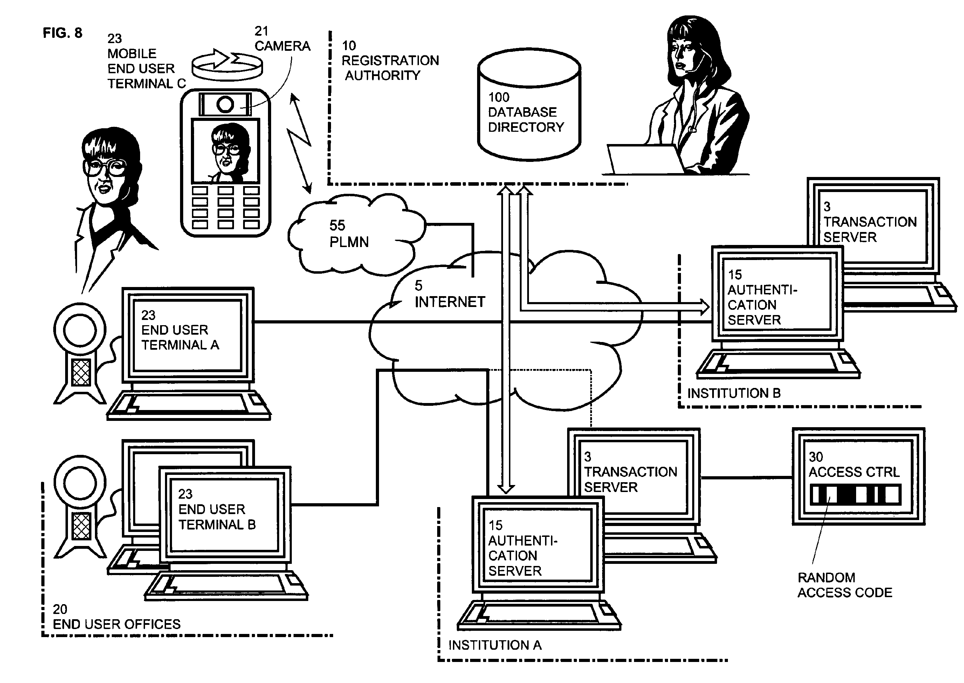

A network-based biometric system, as shown in figures 4 and 8, typically comprises numerous end user terminals 23, which are installed in end user offices 20, and at least one authentication server 15, which is installed at an institution, such as a commercial, financial or official institution, that provides services or goods for the end user. The end user terminals 23 and the authentication server 15 are connected to a common network 5, such as the Internet, over which data is exchange preferably in compressed and encoded form.

In the embodiment shown in figure 4 the authentication server 15 has direct access to the database 100 of the registration authority indicating that enrolment and authentication are performed within the same institution. In this event, the institution independently operates the network-based biometric system in order to authenticate clients before commercial transactions are performed.

In the embodiment shown in figure 8 the registration authority 10 is connected to the common network 5 and may independently provide registration services for different institutions which are not in mutual contact. Hence, the registration authority 10 provides services for smaller or larger institutions by centrally performing enrolment procedures. The institutions however may access the database 100 or a corresponding server, e.g. the enrolment server 13 shown in figure 1, of the registration authority 10 through their authentication servers 15 in order to download the registered non-biometric and biometric profiles of an end user for authentication purposes. The cost for maintaining the registration authority 10 can therefore be shared by numerous institutions.

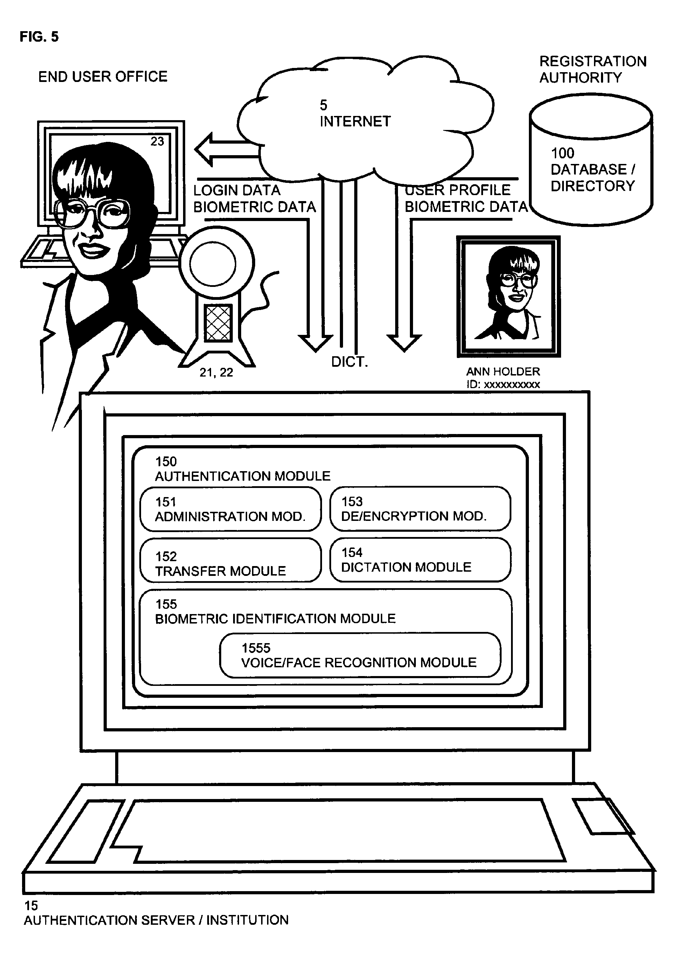

The authentication process illustrated in figure 4 and figure 5 is initiated with a login request by the end user followed by the transfer of non-biometric information, such as a given user identification and a password, which may be compared with the data of the non-biometric user profile stored in the database 100.

After the receipt of the non-biometric information, the biometric authentication process is initiated preferably independently of the result of the verification of the non-biometric data, making it difficult for an attacker to locate the reason for the failure of his attack.

In the next step, the authentication server 15 generates a sequence of randomly assembled dictated speech elements or speech segments, for which biometric audio and video samples were captured from the end user. The generated sequence, as shown for example in figure 3, is sent over the network to the end user terminal 23 with a request to provide a corresponding response.

Then, for the corresponding speech elements or speech segments, possibly complete sentences, expressed by the end user, biometric audio and video samples are simultaneously captured. The captured biometric audio and video samples or related biometric data is sent over the network to the authentication server 15, which compares the on-line captured biometric audio and video samples or the related biometric data with biometric audio and video samples or related biometric data, which was retrieved from the database 100 and then accordingly assembled.

If the compared biometric data match and previously verified non-biometric information had been found correct to, then the end user is positively authenticated and connected to the transaction server 3 (see figure 4), allowing the user to initiate the desired transactions.

Figure 5 shows the basic data exchange between the end user terminal 23, the authentication 15 and the registration authority, particularly the database 100. It is shown that the data forwarded to the authentication 15 correspond to one another. However the biometric data downloaded from the database 100 is not provided in the same sequence as the biometric data provided online. Hence, the content of the database 100 would be of little value to an attacker even if he would be able to access the database and to decrypt its content.

For the execution of the authentication processes the authentication server 15 is provided with an authentication module 150 that comprises
a) an administration module 151, that allows processing a login or authentication request by the end user, particularly the verification of non-biometric data;
b) a transfer module 152 that allows transferring biometric and non-biometric data to and from end user terminals 23 and the database 100 of the registration authority;
c) an encryption and decryption module 153 that allows encrypting and decrypting and/or compressing of the transferred data;
d) a dictation module 154 that allows randomly assembling dictated and pre-stored speech elements accordingly and
e) a biometric authentication module 155 that allows comparing the pre-stored and the on-line captured biometric data in order to determine whether they match.

For the comparison of the biometric data, the authentication module 155 comprises a voice recognition module 1551 and visual speech recognition module 1552, more precisely comparators that evaluate the differences between the pre-stored and the on-line recorded biometric data and not the speech itself. Both modules are schematically shown in figure 4 with the relevant mouth region that significantly moves during the expression of the dictated speech elements. Preferably further regions of the face are excluded. Hence, the kind of glasses the end user is wearing or her hair style do not influence the captured biometric data. This gives the end user the required freedom to select a desired appearance without causing a false rejection.

In a preferred embodiment the authentication module 155 further comprises a module 1555 that allows face recognition and/or non-text dependent voice recognition.

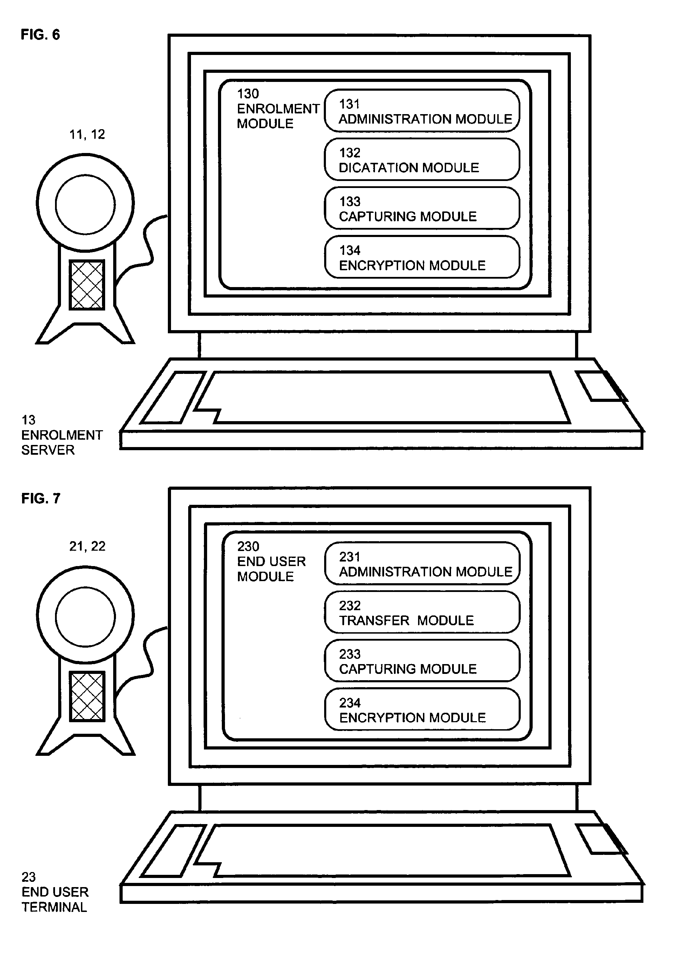

Figure 6 shows the enrolment server 13 of figure 1, which comprises an enrolment module 130 comprising
a) an administration module 131, that allows processing an enrolment request presented by the end user, particularly the registration of non-biometric data;
b) a dictation module 132 that allows individually creating and dictating sequences of speech elements or speech segments;
c) a capturing module 133 that allows capturing of biometric audio and video samples and preferably extracting corresponding biometric data; and
d) an encryption module 134 that allows encrypting and/or compressing the captured biometric audio and video samples or the related biometric data for the storage in the database 100.

Figure 7 shows the end user terminal 23 of figure 4, which comprises an enrolment module 230 comprising
a) an administration module 231, that allows processing a login or authentication request by the end user, particularly forwarding of non-biometric data to the authentication server 15;
b) a transfer module 232 that allows receiving dictation sequences and forwarding captured biometric data from and to the authentication server 15;
c) a capturing module 233 that allows capturing of biometric audio and video samples and preferably extracting corresponding biometric data; and
d) an encryption module 134 that allows encrypting and/or compressing the captured biometric audio and video samples or the related biometric data for the transfer to the authentication server 15.

The embodiment of the network-based biometric system shown in figure 8 has basically been described above. In figure 8 it is further shown that user terminals 23 may get connected over various networks, e.g. a PLMN 55 (a public land mobile network such as a GSM- or UMTS-network), a PSTN (public switched telephone network) such as the ISDN and the Internet including the required gateways with the authentication server 15. Technology required for establishing connections between terminals over various networks is described in [6], US 2004/0095945 A1. Hence, a mobile phone 23 that is equipped with a camera 21 may advantageously be used for performing authentication processes according to the inventive method. As shown in figure 8, the camera 21 of the end user terminal 21 is pivotally mounted and can be turned towards the end user for authentication purposes or in the opposite direction for taking pictures or videos.

Although the present invention has been described in detail with reference to preferred embodiments, a person with ordinary skill in the art will appreciate that various modifications and different implementations may be made without departing from the spirit and scope of the invention. Particularly the architecture of the program modules that was shown in a preferred embodiment to further illustrate the functionalities of the inventive biometric system can arranged differently by a man skilled in the art.

References
[1] A. Menezes, P. van Oorschot, S. Vanstone, HANDBOOK OF APPLIED CRYPTOGRAPHY, CRC-Press, Boca Raton 1997
[2] Anil K. Jain, Arun Ross and Salil Prabhakar, An Introduction to Biometric Recognition, IEEE Transactions on Circuits and Systems for Video Technology, Special Issue on Image- and Video-Based Biometrics, Vol. 14, No. 1, January 2004
[3] US 6'101'264
[4] R. Timothy Edwards Michael D. Godfrey, An Analog Wavelet Transform Chip, ISL, Dept. of Electrical Engineering, Stanford University, Stanford, California 94305
[5] US 6'182'035 B1
[6] US 2004/0095945A1
[7] Kate Saenko, Karen Livescu, James Glass, and Trevor Darrell PRODUCTION DOMAIN MODELING OF PRONUNCIATION FOR VISUAL SPEECH RECOGNITION, Computer Science and Artificial Intelligence Laboratory, Massachusetts Institute of Technology, 32 Vassar Street, Cambridge, MA 02139, USA.
[8] Joe Frankel-Korin Richmond-Simon-King Paul Taylor, AN AUTOMATIC SPEECH RECOGNITION SYSTEM USING NEURAL NETWORKS AND LINEAR DYNAMIC MODELS TO RECOVER AND MODEL ARTICULATORY TRACES,Centre for Speech Technology Research, University of Edinburgh, 2 Buccleuch Place, Edinburgh EH8 9LW, UK

## Claims

1. Method for the reliable biometric authentication of end users in at least one institution, such as a commercial, financial or official institution, by means of a network-based biometric system that comprises for each institution at least one authentication server (15), which is accessible over a network (5) such as the Internet, from fixed or mobile end user terminals (23), which are equipped with audio- and video-recording devices (21, 22) and which are designed for simultaneously capturing biometric audio and video samples from the end user, comprising the steps
a) for the enrolment of an end user that has been identified by means of credentials provided at a registration authority (10) of the institution or a related service provider
a1) of simultaneously capturing biometric audio and video samples by means of an enrolment terminal (13) equipped with audio- and video-recording devices (11, 12) for speech elements or speech segments expressed by the end user based on dictated speech elements or speech segments provided by the registration authority (10) and
a2) storing the user profile in a database (100) together with dictated information and the accordingly captured biometric audio and video samples or related biometric data;
b) for the on-line authentication of the end user
b1) of sending information disclosing a sequence of randomly assembled dictated speech elements or speech segments, for which biometric audio and video samples were captured from the end user, over the network (5) to the end user terminal (23) and requesting a corresponding response;
b2) simultaneously capturing biometric audio and video samples for the corresponding speech elements or speech segments expressed by the end user and sending the captured biometric audio and video samples or related biometric data over the network (5) to the authentication server (15);
b3) comparing the on-line captured biometric audio and video samples or the related biometric data with correspondingly assembled biometric audio and video samples or related biometric data stored in the database (100); and
b4) providing a decision if the end user has been identified.

2. Method according to claim 1 comprising the steps of creating a set of dictated speech elements, preferably comprising vowels and consonants, or speech segments, preferably comprising the numbers of 0, ..., 9, for the enrolment of each end user individually and/or issuing the dictated speech elements or speech segments that were created for enrolment or randomly assembled for authentication in form of an audio-file, a text file or a graphical file.

3. Method according to claim 1 or 2 comprising the steps of comparing non-biometric data and biometric data provided on-line by the end user with pre-stored non-biometric data and with pre-stored biometric data and indicating the result of the authentication process at the end of the complete procedure only, preferably without indicating which part of the performed comparison processes was successful or failed.

4. Method according to claim 1, 2 or 3 comprising the steps of comparing simultaneously recorded and on-line transferred biometric data with pre-stored biometric data, which relate to movements of the end users mouth region, particularly movements of the lips and tongue, as well as pre-stored biometric data that relate to at least one corresponding biometric audio sample.

5. Method according to one of the claims 1 to 4 comprising the steps of additionally performing voice recognition and/or face recognition based on patterns captured and stored during enrolment and/or comprising the steps of individually adjusting thresholds that determine the allowable matching differences for each biometric according to the distinctiveness of the individual biometric, the individual end user, the end user terminal and/or the value or importance of the transaction and/or comprising the steps of performing visual and/or acoustical speech recognition preferably with a neural network that comprises training data, which were extracted from the biometric samples captured from the end user.

6. Method according to one of the claims 1 to 5 comprising the steps of forwarding an acoustical or optical authorisation code to the end user, which is recorded by the audio- and video-recording devices (21, 22) of the end user terminal (23) and sent back to the authentication server (15) for comparison with the original value and/or comprising the steps of transferring an equipment identification of the end user terminal (23), such as the IMEI of a mobile phone, to the authentication server (15) for comparison with a value pre-stored for the concerned end user.

7. Method according to one of the claims 1 to 6 comprising the steps of identifying the end user for each session in which the performance of a commercial or an official transaction is requested and/or comprising the steps of encrypting and/or compressing biometric data that are transferred over the network (5) or stored in the database (100).

8. A network-based biometric system for the reliable biometric authentication of end users with end user terminals (23) which are equipped with audio- and video-recording devices (21, 22) and which are connected over a network (5) such as the Internet to a centralised authentication server (15) of an institution, such as a commercial, financial or official institution, which is connected to a database (100) of a registration authority (10), which is containing biometric audio and video samples or related biometric data that were captured from end users by means of an enrolment server (13) with audio- and video-recording devices (11, 12), said end user terminals (23), authentication server (15) and enrolment server (13) comprising program modules (230; 150; 130) that are designed to operate according to the method defined in one of the claims 1-7.

9. A network-based biometric system according to claim 8 with the enrolment server (13) comprising an enrolment module (130) that comprises
a) an administration module (131) designed for processing application data of an end user in order to establish a user profile;
b) a dictation module (132) designed for dictating speech elements or speech segments in acoustical, textual or graphical form; and
c) a capturing module designed for simultaneously capturing biometric audio and video samples for speech elements or speech segments expressed by the end user based on the dictated speech elements or speech segments,
which biometric audio and video samples or related biometric data are stored, together with related dictation information and the user profile, in the database (100).

10. A network-based biometric system according to claim 8 or 9 with the authentication server (15) comprising an authentication module (150) that comprises
a) an administration module (151) designed for entering a session with the end user terminal (23) and to process a login request sent by the end user based on a stored user profile retrieved from the database (100);
b) a dictation module (152) designed for randomly assembling a sequence of dictated speech elements or speech segments and creating a corresponding audio file, text file or graphical file that is sent by the authentication module (150) over the network (5) to the user terminal (23) with the request to provide a response;
c) a capturing module (154) designed for receiving biometric audio and video samples or related biometric data for the corresponding speech elements or speech segments that were recorded at the end user terminal (23) and sent over the network (5) to the authentication server (15);
d) a biometric authentication module (155) designed for comparing the on-line simultaneously captured biometric audio and video samples or related biometric data with correspondingly assembled biometric audio and video samples or related biometric data retrieved for this end user from the database (100); and designed for providing a decision if the end user has been identified.

11. A network-based biometric system according to claim 8, 9 or 10 with the end user terminal (23) comprising an end user module (150) that comprises
a) an administration module (231) designed for entering a session with the authentication server (15) and to process and forward a login request;
b) a dictation module (232) designed for receiving and issuing the received sequence of dictated speech elements or speech segments to the end user;
c) a capturing module (233) designed for capturing biometric audio and video samples or related biometric data for the corresponding speech elements or speech segments that were expressed by the end user;
and that is designed for sending the captured biometric audio and video samples or related biometric data over the network (5) to the authentication server (15).

12. A network-based biometric system according to one of the claims 8-11 with the end user terminals (23), the authentication server (15) and the enrolment server (13) comprising a module (234, 153, 234) that allows encryption and decryption of biometric audio and video samples or related biometric data.

13. A network-based biometric system according to one of the claims 7-12, with the enrolment server (13), the authentication server (15) and the terminals (23) of the end users being connected via the Internet (5) to one another.

14. A network-based biometric system according to one of the claims 7-13, with the end user terminal (23) being a mobile phone that is equipped with a camera, which preferably is pivotally mounted, so that it can be rotated towards the end user.
